# EUROPÄISCHE PATENTSCHRIFT

(11) **EP 2 133 721 B1**
(45) Veröffentlichungstag und Bekanntmachung des Hinweises auf die Patenterteilung: **21.09.2011**
(21) Anmeldenummer: 09162406.4
(22) Anmeldetag: 10.06.2009
(51) Int. Cl.: G02B 7/00, B60Q 1/04

(54) **Optisches System, insbesondere Scheinwerfer, Sensor oder Kamera mit einem Ausgleichselement zur Kompensation thermischer Einflüsse**
Optical system, in particular headlamp, sensor or camera with a compensation element for compensating for thermal influences
Système optique, notamment phare, capteur ou caméra, doté d'un élément d'équilibrage pour compenser les influences thermiques

(30) Priorität: 11.06.2008 DE 102008027721
(43) Veröffentlichungstag der Anmeldung: 16.12.2009
(73) Patentinhaber: Hella KGaA Hueck & Co., 59552 Lippstadt (DE)
(72) Erfinder: Kalwa, Matthias, 59555 Lippstadt (DE)

(56) Entgegenhaltungen:
- EP-A- 0 838 367
- WO-A-99/35526
- WO-A-2009/060032
- FR-A- 2 564 947

## Beschreibung

Die vorliegende Erfindung betrifft ein optisches System mit einem Gehäuse, das durch ein Aufnahmeelement aufgenommen ist, wobei im Gehäuse wenigstens ein optisches Mittel aufgenommen ist und wobei in der Verbindungskette zwischen dem Aufnahmeelement und dem optischen Mittel wenigstens ein Ausgleichselement angeordnet ist.

Ein optisches System der hier interessierenden Art kann beispielsweise einen Scheinwerfer für ein Kraftfahrzeug wie ein Personenkraftwagen oder auch ein Nutzfahrzeug betreffen. Dabei ist das Aufnahmeelement durch ein Rahmenelement des Kraftfahrzeugs und das optische Mittel durch ein im Scheinwerfer aufgenommenes Lichtmodul gebildet ist. Der Scheinwerfer besitzt ein Gehäuse, das über mehrere Verbindungspunkte mit dem Rahmenelement des Kraftfahrzeuges verbunden ist. Das Rahmenelement kann beispielsweise einen Frontquerträger, ein Strukturbauteil oder ein sonstiges Aufnahmeteil betreffen, das zur Anordnung des Scheinwerfers Bestandteil des Kraftfahrzeuges ist. Im Inneren des Gehäuses des Scheinwerfers ist das Lichtmodul aufgenommen, das häufig über mechanische Einstellelemente bewegbar angeordnet wird. Zur Aufnahme kann eine Aufnahmeeinheit dienen, die eine mechanische Verbindung zwischen dem Lichtmodul und dem Gehäuse des Scheinwerfers bildet. Häufig können Lichtmodule an der Rückwand des Gehäuses des Scheinwerfers angeordnet werden, wobei die Aufnahmeeinheit Verstellelemente umfassen kann, über die die Lage des Lichtmoduls relativ zum Rahmenelement des Kraftfahrzeuges veränderbar ist. Hingegen wird das Gehäuse zumeist starr mit dem Rahmenelement verbunden. Im Ergebnis ist eine Verbindungskette zwischen dem Rahmenelement des Kraftfahrzeuges und dem Lichtmodul gebildet, die wenigstens einen Verbindungspunkt zwischen dem Rahmenelement und dem Gehäuse des Scheinwerfers sowie die Verbindung des Lichtmoduls mit dem Gehäuse des Scheinwerfers über die Aufnahmeeinheit umfasst.

Ferner kann das optische System als eine Sensoreinrichtung mit einem Gehäuse ausgebildet sein, wobei das optische Mittel durch ein im Gehäuse aufgenommenes Sensorelement gebildet wird. Insbesondere kann die Sensoreinrichtung als Kamerasystem ausgeführt und vorzugsweise als Frontkamera für ein Kraftfahrzeug einsetzbar sein, wobei das Sensorelement durch eine Bilderfassungseinheit gebildet ist. Derartige Kameras können fahrzeuginnenseitig an der Frontscheibe angeordnet werden, beispielsweise hinter dem Rückspiegel. Durch erheblichen Wärmeeintrag, etwa durch Sonnenstrahlung, kann eine unzulässige Abweichung der Lage der als optisches Mittel bezeichneten Bilderfassungseinheit der Kamera eintreten, da sich insbesondere das Gehäuse verzieht.

Aus der DE 35 18 404 A1 ist ein optisches System in Gestalt eines Scheinwerfers für ein Kraftfahrzeug bekannt, der einen Abblendschirm aufweist, der derart montiert ist, dass er mittels eines Hilfsstückes in einem Träger aufgehängt ist, wobei der Träger, der Abblendschirm und das Hilfsstück relative Abmessungen und lineare Wärmedehnungskoeffizienten besitzen, so dass ungeachtet der Änderungen der Betriebszeit der obere Begrenzungsrand des Abblendschirms eine unveränderliche Lage in Bezug auf die Horizontale beibehält. Nachteilhaft ist bei einer derartigen Ausführung die sehr aufwendige Aufnahme des Lichtmoduls, welches in nicht einteiliger Form sowohl vorderseitig als auch rückseitig aufgeteilt in einen Reflektor und eine Projektionslinse an einem Fuß befestigt werden muss. Dieser wirkt mit einer Halterung zusammen, an der die Linse angeordnet ist, wohingegen der Reflektor am Fuß angeordnet werden muss. Insbesondere ist ein Hilfsaufhängungsstück erforderüch, um den Schirm, welcher die Hell-Dunkel-Grenze generiert, innerhalb des Lichtmoduls aufzuhängen. Im Ergebnis kann lediglich eine unveränderliche Stellung des Schirms in Bezug auf die Horizontale erreicht werden, wobei beispielsweise eine Verkippung der gesamten aus Reflektor und Linse bestehenden Einheit im Scheinwerfer selbst nicht ausgeglichen werden kann. Die thermische Kompensation betrifft daher lediglich die Komponenten des Lichtmoduls selbst, so dass auftretende Verkippungen des Lichtmoduls im Scheinwerfer bzw. im Kraftfahrzeug nicht kompensiert werden können.

Das Lichtmodul kann ein Abblendlicht mit einer Hell-Dunkel-Grenze aussenden, wobei zu beachten ist, dass die Hell-Dunkel-Grenze eine vorgeschriebene Höhe in Bezug auf die Horizontale nicht überschreiten darf. Bei einer ungünstigen thermischen Beeinflussung des Scheinwerfers kann jedoch auf Grund des Wärmedehnungsverhaltens der Werkstoffe ein unzulässiger Anstieg der Hell-Dunkel-Grenze entstehen. Diese Werkstoffe betreffen die Werkstoffe des Gehäuses, der Aufnahmeeinheit und des Lichtmoduls selbst. Die thermische Beeinflussung des Scheinwerfers betrifft einerseits eine Änderung der Umgebungstemperatur, witterungsbedingt oder auf Grund einwirkender Motorwärme, als auch der Brennbetrieb des Leuchtmittels, das im Lichtmodul betrieben wird. Dadurch kann eine Temperaturschichtung innerhalb des Scheinwerfers auftreten, die dazu führt, dass Werkstoffe in warmen Bereichen eine stärkere Dehnung aufweisen können als Werkstoffe in kälteren Bereichen. Zwar ist es bekannt, zur Schaffung der Aufnahmeeinheit Werkstoffe zu verwenden, die ein wesentlich niedrigeren Wärmedehnungskoeffizienten aufweisen als beispielsweise das Gehäuse, jedoch kann die unveränderte Lage des Lichtmoduls relativ zum Rahmenelement des Kraftfahrzeuges allein durch eine vorteilhafte Auswahl verschiedener Werkstoffe der Aufnahmeeinheit und des Gehäuses nicht sicher gestellt werden.

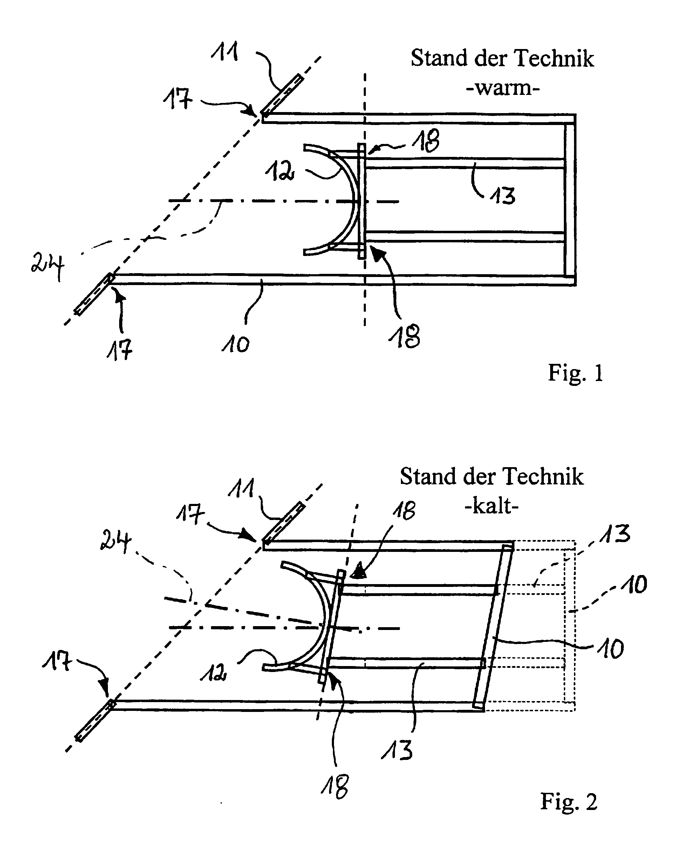

Die Figuren 1 und 2 zeigen eine Anordnung eines Scheinwerfers für ein Kraftfahrzeug, wobei der Scheinwerfer in Figur 1 in einem warmen Zustand gezeigt ist, der beispielsweise durch den Brennbetrieb des Leuchtmittels im Lichtmodul oder witterungsbedingt vorherrscht. Figur 2 zeigt hingegen einen Scheinwerfer für ein Kraftfahrzeug in einem abgekühlten Zustand. Der Scheinwerfer in den Figuren 1 und 2 ist schematisiert dargestellt und besitzt ein Gehäuse 10, das vorderseitig in einem Rahmenelement 11 des Kraftfahrzeuges integriert ist. Das Lichtmodul 12 ist über eine Aufnahmeeinheit 13 an der Rückwand des Gehäuses 10 des Scheinwerfers angeordnet. Die Ebene, die durch die Verbindungspunkte 17 zwischen dem Gehäuse 10 und dem Rahmenelement 11 aufgespannt wird, ist zur Hell-Dunkel-Grenze 24, vorliegend vereinfacht als horizontale Ebene dargestellt, stark geneigt. Hingegen ist die Ebene, die durch die Aufnahmepunkte 18 zwischen der Aufnahmeeinheit 13 und dem Lichtmodul 12 gebildet ist, nicht geneigt und verläuft etwa senkrecht zur Hell-Dunkel-Grenze 24.

Gemäß der Darstellung ist erkennbar, dass die Hell-Dunkel-Grenze 24 durch den Übergang vom warmen in den kalten Zustand des Scheinwerfers angehoben wird. Die Ursache hierfür ist eine Abweichung der Ebene, die durch die Aufnahmepunkte 18 gebildet sind. Durch die Abweichung der genannten Ebene bilden sich Längendifferenzen in der oberen und unteren Wand des Gehäuses 10 im Vergleich zum oberen und unteren Bereich der Aufnahmeeinheit 13 zwischen der Rückwand des Gehäuses 10 und dem Lichtmodul 12. Aus konstruktiven Gründen ist jedoch ein paralleler Verlauf der Ebene der Verbindungspunkte 17 und der Ebene durch die Aufnahmepunkte 18 nicht immer möglich.

Weiterer stand der Technik wird in den Druckschriften WO 99/35526 und WO 2009/060032 offenbart.

Es ist daher die Aufgabe der vorliegenden Erfindung, ein optisches System mit einem optischen Mittel zu schaffen, wobei die Lage des optischen Mittels eine verbesserte thermische Stabilität aufweist.

Diese Aufgabe wird ausgehend von einem optischen System gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass das Ausgleichselement eine kegelförmige Membran und einen Kompensationskörper aufweist, der derart mit der Membran zusammenwirkt, dass in der Membran ein thermisch bedingter Verstellweg erzeugbar ist, über den eine thermisch bedingte Änderung der Lage des optischen Mittels relativ zum Aufnahmeelement ausgleichbar ist.

Die Erfindung geht dabei von dem Gedanken aus, ein optisches System mit wenigstens einem Ausgleichselement zu schaffen, das in der Verbindungskette zwischen dem optischen Mittel und dem Aufnahmeelement angeordnet ist. Durch die erfindungsgemäße Ausgestaltung des Ausgleichselementes mit einer Membran und einem Kompensationskörper wird erreicht, dass der Kompensationskörper derart mit der Membran zusammen wirkt, dass in der Membran ein thermisch bedingter Verstellweg erzeugbar ist.

Dieser Verstellweg wird dazu genutzt, eine thermisch bedingte Änderung der Lage des optischen Mittels im Aufnahmeelement auszugleichen, indem der Verstellweg der thermischen Verlagerung des optischen Mittels entgegenwirkt. Ausgehend von einem aus dem Stand der Technik bekannten Ausgleichselement, das die eindimensionale thermische Dehnung eines Werkstoffes mit einem hohen Wärmedehnungskoeffizienten ausnutzt, wird durch die Zusammenwirkung eines Kompensationskörpers mit der Membran ein thermomechanischer Verstärker geschaffen, durch den ein großer Verstellweg bereitgestellt werden kann, ohne große räumliche Abmessungen für das Ausgleichselement vorzusehen.

Eine Membran beschreibt im Sinne der vorliegenden Erfindung einen Dehnungskörper mit einer flachen Erstreckung. Der Verstärkungseffekt zur Bereitstellung eines großen Verstellweges wird dadurch ausgenutzt, dass sich die Membran in der Ebene, in der sich diese erstreckt, ausdehnt. Durch den Kompensationskörper wird die Ausdehnung des Membranwerkstoffes in wenigstens einer Richtung gehemmt, so dass die Membran eine Ausweichbewegung ausführt, die zur Bereitstellung des Verstellweges genutzt wird.

Nach einer möglichen Ausführungsform kann das optische System als Scheinwerfer mit einem Gehäuse für ein Kraftfahrzeug ausgebildet sein, wobei das Aufnahmeelement durch ein Rahmenelement des Kraftfahrzeugs und das optische Mittel durch ein im Scheinwerfer aufgenommenes Lichtmodul gebildet ist. Das Gehäuse kann über wenigstens einen Verbindungspunkt mit dem Rahmenelement des Kraftfahrzeuges verbunden sein, wobei wenigstens ein Ausgleichselement im Verbindungspunkt angeordnet ist. Ferner kann vorgesehen sein, das Lichtmodul durch die Aufnahmeeinheit über wenigstens einen Aufnahmepunkt aufzuhängen, wobei das wenigstens eine Ausgleichselement im Aufnahmepunkt angeordnet ist.

Es gibt aus thermischer Sicht mehrere sinnvolle Positionen für das Ausgleichselement. Dieses kann vollständig im Geräteinneren vorhanden sein, beeinflusst durch die dort relevante Innentemperatur und besonders stark beeinflusst von einem innere Wärme freisetzenden Betriebszustand des Lichtmoduls. Ferner kann das Ausgleichselement vollständig außerhalb des Gehäuses angeordnet sein, beeinflusst durch die dort relevante Umgebungstemperatur und weitgehend unbeeinflusst davon, ob der Scheinwerfer durch seinen Betrieb innere Wärme freisetzt. Insbesondere kann das Ausgleichselement als Teil der Gehäusewand ausgebildet sein, beeinflusst durch eine Mischung aus dort vorherrschender Umgebungs- und Innentemperatur und nicht unbeeinflusst durch einen innere Wärme freisetzenden Betriebszustand des Lichtmoduls.

Welche Temperatur hier den Ausschlag gibt, wird vor allem durch die Konvektionszustände bestimmt, die wiederum durch die Gerätekonstruktion gestaltbar sind. Eine vom Innenraum her exponiert angeordnete innere Membranoberfläche und von außen eher konvektionsgeschützt gestaltete Membran bedeutet eine vorwiegende Beeinflussung der Membran durch die Innentemperatur mit starkem Einfluss durch einen Wärme freisetzenden Brennbetrieb des Lichtmoduls.

Häufig sind zwischen dem Gehäuse und dem Rahmenelement sowie zwischen dem Lichtmodul und dem Gehäuse Drei-Punkt-Aufnahmen vorgesehen, wobei zumindest ein Verbindungspunkt bzw. Aufnahmepunkt eine Verstellmöglichkeit umfassen kann, um die Lage des Lichtmoduls relativ zum Rahmenelement des Kraftfahrzeuges zu justieren. Diese Justage betrifft insbesondere die Hell-Dunkel-Grenze in der Verstellung der Höhe. Aufgrund neuerer Formschöpfungen der Kraftfahrzeug-Frontpartie mit einer starken Abflachung im Bereich der Montage der Scheinwerfer im Rahmenelement ist die Ebene, die durch die Drei-Punkt-Aufnahme zur Anordnung des Scheinwerfers im Rahmenelement aufgespannt wird, zur Längsrichtung des Fahrzeugs stark geneigt. Hingegen kann die Drei-Punkt-Aufnahme des Lichtmoduls im Gehäuse des Scheinwerfers eine Ebene aufspannen, die im Wesentlichen senkrecht zur Lichtaustrittsrichtung des Scheinwerfers verläuft oder zumindest eine geringere bzw. im allgemeinen Fall eine andere Schrägung besitzt, als die Ebene, die durch die Drei-Punkt-Aufnahme des Gehäuses des Scheinwerfers im Rahmenelement aufgespannt ist.

Gemäß der Erfindung ist die Membran trichterförmig ausgebildet und kann sich um eine Achse herum erstrecken, so dass die Membran eine achsnahe Innenseite und eine achsfeme Außenseite aufweist. Der Kompensationskörper kann einen Ringkörper bilden, der die Membran über die achsfeme Außenseite umschließt. Die trichterförmige Membran bildet folglich einen Hohlkegel mit einem Kegelwinkel, wobei sich der Kegelwinkel bei einer Änderung der Temperatur der Membran ändert. Die Änderung des Kegelwinkels wird durch eine Wärmedehnung des Werkstoffes der Membran hervorgerufen, so dass der Verstellweg in Richtung zur Achse der Membran durch die Innenseite gegenüber der Außenseite der Membran erzeugt wird.

Um den Verstellweg der Innenseite der Membran relativ zur Außenseite für die Kompensation der thermisch bedingten Lageänderung des Lichtmoduls auszunutzen, kann sich an die Innenseite der Membran ein Anschlussstück anschließen. Dieses Anschlussstück kann beispielsweise einen Hohlzylinder bilden, der sich ebenfalls rotationssymmetrisch um die Achse herum erstreckt. Die Membran kann vorteilhafterweise rotationssymmetrisch ausgebildet sein, jedoch ist eine Gestaltung der Membran als Polygon oder in Form einer Vielzahl von Speichen, die sich zwischen der achsnahen Innenseite und der achsfernen Außenseite vorwiegend radial erstrecken, ebenfalls möglich, sodass vorliegend die Kegelform der Membran nicht im mathematischen Sinn aufzufassen ist, sondern eher die abstrakte, makroskopische Form der Membran beschreibt. Insbesondere dann, wenn die Membran aus einer Vielzahl von Speichen gebildet ist, entfallen tangentiale Spannungen in der Membran, die sich auf Grund thermischer Dehnungen bilden können. Sollte eine Dichtheit der Membran, beispielsweise gegenüber Flüssigkeiten oder Gasen, erforderlich sein, können die Speichen der Membran mit einem dichtenden Material bespannt sein. Ferner kann die Membran eine Wellenform aufweisen, wodurch ebenfalls die Bildung von Tangentialspannungen vermieden wird, jedoch eine Dichtheit gegenüber obenstehend genannten Medien erzielbar ist. Der Werkstoff der Membran kann derart gewählt werden, dass dieser einen großen Wärmedehnungskoeffizienten aufweist, wobei der Wärmedehnungskoeffizient der Membran größer sein muss als der Wärmedehnungskoeffizient des Ringkörpers. Beispielsweise kann der Ringkörper aus einem metallischen Werkstoff ausgebildet sein, wohingegen die Membran PP, PBT, PA, PC, POM oder ein PMMA aufweisen kann.

Es ist von besonderem Vorteil, wenn der Ringkörper über die Außenseite der Membran aufgeschraubt, aufgeschrumpft, aufgepresst oder mit dem Werkstoff der Membran umspritzt ist. Ist der Wärmedehnungskoeffizient des Werkstoffes der Membran wesentlich höher als der Wärmedehnungskoeffizient des Ringkörpers, beispielsweise um einen Faktor 6 bis 10, so kann der Durchmesser des Ringkörpers als temperaturunabhängig angenommen werden. Über die Außenseite der Membran bzw. über den Ringkörper kann das Ausgleichselement im Verbindungspunkt bzw. im Aufnahmepunkt aufgenommen werden, wobei das Scheinwerfergehäuse bzw. das Lichtmodul über das Anschlussstück verbunden wird. Um den Verstellweg zur Korrektur der Lage des Lichtmoduls relativ zum Rahmenelement zu vergrößern, können mehrere Ausgleichselemente mechanisch in einer Reihe angeordnet werden. Dadurch können sich die Einzelverstellwege der ggf. in unterschiedlichen thermischen Zonen eingeordneten Membranen aufaddieren bzw. in geeigneter Weise so überlagern, dass die Einflüsse der eintretenden thermischen Szenarien als mögliche Vielzahl von Kombinationen aus Einzeltemperaturen in den thermischen Zonen im Gehäuse auf die Ausrichtung des Lichtmoduls kompensierend einwirken.

Vorzugsweise kann das Ausgleichselement derart angeordnet sein, dass wenigstens auf einer Seite der trichterförmigen Membran eine Konvektion zwischen der Membran und der Umgebungsluft des Scheinwerfers ermöglicht ist. Diese Möglichkeit kann sowohl bei einem Ausgleichselement in einem Verbindungspunkt zwischen dem Rahmenelement und dem Gehäuse als auch bei einem Ausgleichselement im Aufnahmepunkt zwischen dem Gehäuse und dem Lichtmodul geschaffen werden. Daraus ergibt sich der Vorteil, dass die Membran durch Konvektion die Umgebungstemperatur annehmen kann bzw. durch diese unmittelbar erwärmt oder abgekühlt werden kann. Insbesondere kann das Ausgleichselement derart angeordnet sein, dass die Membran einen Teil des Gehäuses des Scheinwerfers bildet. Ist das Ausgleichselement in einem Aufnahmepunkt zwischen dem Lichtmodul und dem Gehäuse angeordnet, kann die Aufnahmeeinheit als Verbindung zwischen dem Lichtmodul und dem Aufnahmepunkt dienen. Die Aufnahmeeinheit kann das Lichtmodul an der Rückwand des Gehäuses anordnen, so dass das Ausgleichselement in der Rückwand des Gehäuses integriert werden kann, und so dass das Anschlussstück des Ausgleichselementes mit der Aufnahmeeinheit in Verbindung gebracht ist. Das Gehäuse des Scheinwerfers kann ferner Befestigungsarme aufweisen, die außenseitig am Gehäuse angebracht sind und endseitig den Verbindungspunkt zum Rahmenelement bilden. Dabei können die Verbindungspunkte an den Befestigungsarmen des Gehäuses beispielsweise die Membran umschließen, wobei der Ringkörper Bestandteil der ringförmigen Umschließung des Verbindungspunktes um die Membran sein kann.

Als höchste Integrationsstufe bei einem innen angebrachten Ausgleichselement werden das äußere oder das innere Anschlussstück sowie die Membran aus dem gleichen Werkstoff gebildet, aus dem auch ein ohnehin erforderliches Befestigungs- oder Führungselement gebildet wird, beispielsweise POM, PBT oder PA. Der Kompensationskörper wird durch den Werkstoff gebildet, aus dem auch die Anschlussgeometrie des optischen Systems gebildet wird, beispielsweise ein Metallblech ein Metallguss oder BMC. Es ist also trotz hinzukommender thermischer Ausgleichsfunktion kein zusätzliches Bauteil erforderlich.

Als höchste Integrationsstufe bei einem außen angebrachten Ausgleichselement werden das äußere oder das innere Anschlussstück sowie die Membran aus dem gleichen Werkstoff gebildet, aus dem auch das Gehäuse gebildet wird, beispielsweise PP, PBT, PA oder ABS. Der Kompensationskörper wird durch den Werkstoff gebildet, aus dem auch ein ohnehin erforderliches Verstärkungselement am Befestigungspunkt zur Karosserie gebildet wird, beispielsweise eine Metallhülse, eine Blechklammer oder ein Kunststoffelement. Es ist also trotz hinzukommender thermischer Ausgleichsfunktion kein zusätzliches Bauteil erforderlich.

Als höchste Integrationsstufe bei einem in der Gehäusewand angebrachten Ausgleichselement werden das äußere und innere Anschlussstück sowie die Membran aus dem gleichen Werkstoff gebildet, aus dem auch das Gehäuse gebildet wird, beispielsweise PP, PBT, PA oder ABS. Der Kompensationskörper wird entweder durch den Werkstoff gebildet, aus dem auch ein ohnehin erforderliches Verstellelement am Befestigungspunkt zum optischen System gebildet wird, beispielsweise eine metallische Gewindestange. Es ist also trotz hinzukommender thermischer Ausgleichsfunktion kein zusätzliches Bauteil erforderlich. Oder der Kompensationskörper wird aus einem zusätzlichen Bauteil gebildet, das bei der Scheinwerfermontage vorzugsweise von außen auf das Gehäuse aufgesetzt wird oder schon beim Formgebungsprozess des Gehäuses in das Gehäuse integriert wird.

Vorzugsweise gilt für das äußere und das innere Anschlussstück, dass ein Materialwechsel zwischen Membran und Anschlussstück vorliegen kann; wobei dann das Anschlussstück vorzugsweise aus demselben Material ausgebildet wird, aus dem auch der Kompensationskörper gebildet wird. Die Membran und das Anschlussstück können aus demselben Material gebildet sein, dann wird der Kompensationskörper auf das Anschlussstück in der Nähe des Membranrandes aufgesetzt.

Bestehen äußeres Anschlussstück und Membran aus demselben Material, dann ist das äußere Anschlussstück "höht" ausgeführt; liegt eine Materialwechsel zwischen Membran und äußerem Anschlussstück vor, kann das Anschlussstück auch "massiv" ausgeführt sein. Das innere Anschlussstück kann massiv oder hohl ausgeführt sein, unabhängig davon, ob ein Materialwechsel zwischen Anschlussstück und Membran vorliegt.

Nach einer weiteren Ausführungsform kann das optische System als Sensoreinrichtung mit einem Gehäuse ausgebildet sein, wobei das optische Mittel durch ein im Gehäuse aufgenommenes Sensorelement gebildet ist. Die Sensoreinrichtung kann als Kamerasystem ausgeführt und vorzugsweise als Frontkamera für ein Kraftfahrzeug eingesetzt werden, wobei das Sensorelement durch eine Bilderfassungseinheit gebildet ist. Dabei ist das Gehäuse der Sensoreinrichtung und die Aufnahme des Sensorelementes durch ein Ausgleichselement auf gleiche Weise beeinflussbar wie auch bei einem Scheinwerfer. Folglich wird in den nachfolgenden Ausführungsbeispielen lediglich auf einen Scheinwerfer eingegangen, wobei die Wirkzusammenhänge auf eine Sensoreinrichtung analog übertragbar sind.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: einen Scheinwerfer für ein Kraftfahrzeug in einer schematischen Darstel- lung, wobei der Scheinwerfer in einem betriebswarmen Zustand gezeigt ist und das Lichtmodul die vorgesehene Lage aufweist,
- Fig. 2: der Scheinwerfer gemäß dem Stand der Technik nach Figur 1, wobei der Scheinwerfer im abgekühlten Zustand gezeigt ist und das Lichtmodul in einer von der vorgesehenen Lage abgewichenen Lage gezeigt ist,
- Fig. 3: einen Scheinwerfer für ein Kraftfahrzeug mit einer erfindungsgemäßen Anordnung eines Ausgleichselementes zwischen dem Gehäuse und dem Rahmenelement, wobei der Scheinwerfer in einem betriebswarmen Zu- stand gezeigt ist,
- Fig. 4: eine Darstellung des Scheinwerfers gemäß Fig. 3, wobei der Scheinwerfer in einem abgekühlten Zustand gezeigt ist,
- Fig. 5: ein weiteres Ausführungsbeispiel eines Scheinwerfers in einem betriebs- warmen Zustand mit einem Ausgleichselement zwischen dem Gehäuse und dem Rahmenelement des Kraftfahrzeuges in einem betriebswarmen Zustand,
- Fig. 6: eine Darstellung des Scheinwerfers gemäß Fig. 5, wobei der Scheinwerfer in einem abgekühlten Zustand gezeigt ist,
- Fig. 7: ein weiteres Ausführungsbeispiel eines Scheinwerfers für ein Kraftfahr- zeug mit einem Ausgleichselement, das zwischen dem Gehäuse des Scheinwerfers und dem Lichtmodul angeordnet ist, wobei der Scheinwer- fer in einem betriebswarmen Zustand gezeigt ist,
- Fig. 8: eine Darstellung des Scheinwerfers gemäß Fig. 7, wobei der Scheinwerfer in einem abgekühlten Zustand gezeigt ist und
- Fig. 9: eine Detailansicht eines Ausgleichselementes gemäß der vorliegenden Erfindung.

Die Figuren 1 und 2 zeigen einen Scheinwerfer für ein Kraftfahrzeug gemäß dem Stand der Technik wie vorstehend bereits beschrieben.

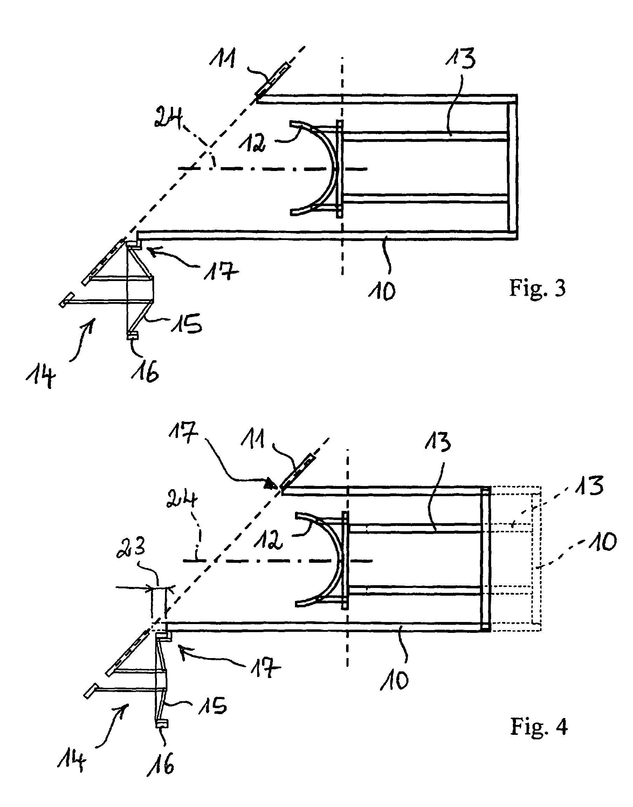

Die Figuren 3 und 4 zeigen einen Scheinwerfer für ein Kraftfahrzeug mit einem Gehäuse 10, das mit einem Rahmenelement 11 des Kraftfahrzeuges verbunden ist. Ein Lichtmodul 12 ist über eine Aufnahmeeinheit 13 an der Rückwand des Gehäuses 10 des Scheinwerfers angeordnet. Ein Ausgleichselement 14 ist am unteren Verbindungspunkt 17 zwischen dem Gehäuse 10 und dem Rahmenelement 11 angeordnet. Aufgrund der Schrägung der Verbindungsebene zwischen dem Gehäuse 10 und dem Rahmenelement 11 weist das Gehäuse 10 auf der unteren Seite eine größere Länge auf als auf der oberen Seite.

Figur 3 zeigt den Scheinwerfer in einem betriebswarmen Zustand, wobei Figur 4 einen abgekühlten Zustand des Gehäuses 10 wiedergibt. Da das Gehäuse 10 auf der unteren Seite eine größere Länge aufweist als auf der oberen Seite, würde zunächst auf der unteren Seite eine stärkere Verlagerung der Rückwand und folglich der Aufnahmeeinheit 13 des Gehäuses 10 stattfinden, siehe Figur 2. Durch die Ausgleichswirkung des Ausgleichselementes 14 wird jedoch erfindungsgemäß ein Verstellweg 23 verursacht, der der Differenz der Geometrieveränderung des unteren Gehäuseteils gegenüber dem oberen Gehäuseteil ausgleicht. Ein Vergleich der Ausgleichselemente 14 in Figur 3 und Figur 4 zeigt, dass die Membran 15 des Ausgleichselementes 14 nach Abkühlung einen flacheren Winkel aufweist. In Wirkverbindung mit dem Kompensationskörper 16, der die Membran 15 außenseitig umschließt, wird der entsprechende Verstellweg 23 erzeugt. Im Ergebnis bleibt die Hell-Dunkel-Grenze 24 des Lichtmoduls 12 in der Horizontalen bestehen.

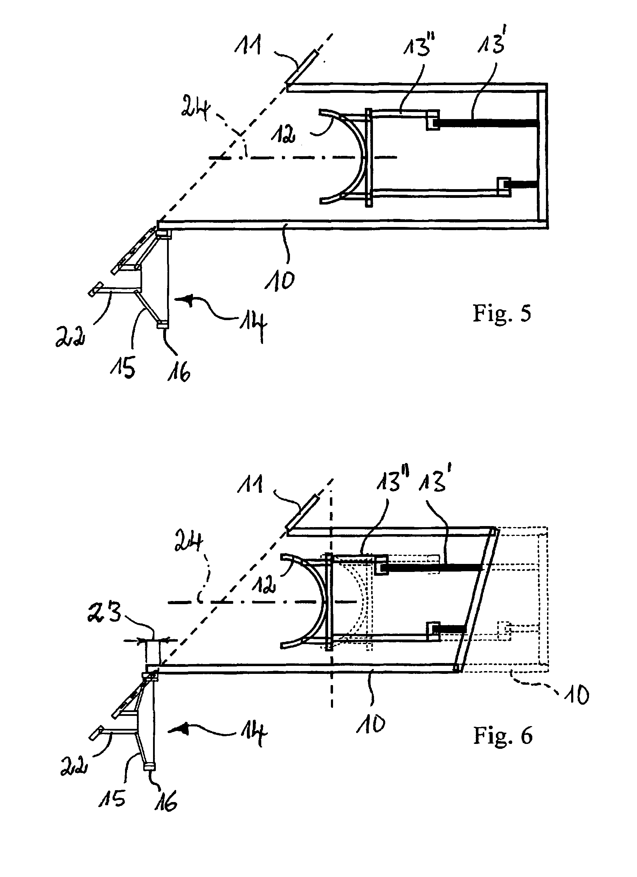

Die Figuren 5 und 6 zeigen ein weiteres Ausführungsbeispiel eines Scheinwerfers für ein Kraftfahrzeug mit einer Aufnahmeeinheit 13, die in eine Aufnahmeeinheit 13' und eine Aufnahmeeinheit 13" unterteilt ist. Die Aufnahmeeinheit 13' besitzt einen Werkstoff mit einem niedrigen Wärmedehnungskoeffizienten, wobei die Aufnahmeeinheit 13" einen Werkstoff mit einem hohen Wärmedehnungskoeffizienten aufweist. Auf Grund der Längendifferenz zwischen dem oberen und unteren Bereich der Aufnahmeeinheit 13' und 13" würde eine Abkühlung des Scheinwerfers zunächst zu einer Absenkung der Hell-Dunkel-Grenze 24 führen. Um dieser Absenkung entgegenzuwirken, ist das Ausgleichselement 14 derart ausgebildet, dass ein Verstellweg 23 auf das Gehäuse 10 gegeben wird, der das thermische Verhalten des Gehäuses 10 auf der oberen und auf der unteren Seite, bedingt durch die Längendifferenz, weiter unterstützt. Ein Vergleich der Membranen 15 in den Figuren 5 und 6 macht deutlich, dass sich der Winkel der Membran 15 bei Abkühlung öffnet. Gemäß der Darstellung ist das Gehäuse 10 am Kompensationskörper 16 oder an der achsfernen Außenseite 21 angekoppelt, wobei das Ausgleichselement 14 über das Anschlussstück 22 am Rahmenelement 11 angeordnet ist. Folglich ergibt sich ein Verstellweg 23, der den unteren Bereich des Gehäuses 10 in Richtung zum Rahmenelement 11 bewegt. Da der Werkstoff der Aufnahmeeinheit 13' einen niedrigeren Wärmedehnungskoeffizienten besitzt als der Werkstoff der Aufnahmeeinheit 13" und da die Länge der Aufnahmeeinheit 13' auf der oberen Seite größer ist als auf der unteren Seite, würde ohne den Verstellweg 23 das Lichtmodul 12 gekippt und die Hell-Dunkel-Grenze 24 würde absinken. Diese Vedagerung kann mit der erfindungsgemäßen Anordnung des Ausgleichselementes 14 ausgeglichen werden.

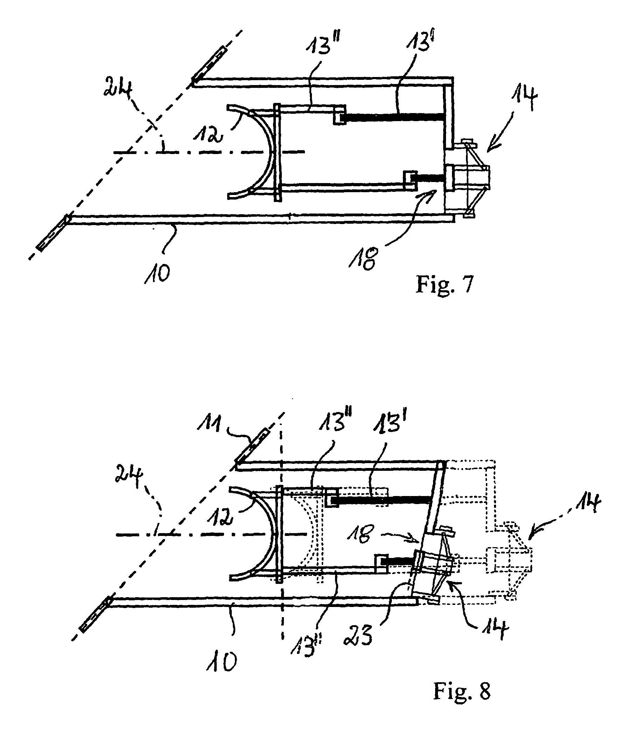

Die Figuren 7 und 8 zeigen ein weiteres Ausführungsbeispiel eines Scheinwerfers mit einem Gehäuse 10, das ebenfalls auf der unteren Seite eine größere Länge aufweist als auf der oberen Seite. Über die Aufnahmeeinheit 13' und 13" ist das Lichtmodul 12 wiederum rückseitig am Gehäuse 10 angeordnet, wobei ein Ausgleichselement 14 zwischen der Aufnahmeeinheit 13 und dem Gehäuse 10 angeordnet ist und wobei die Anordnung des Ausgleichselementes 14 im Aufnahmepunkt 18 erfolgt. Vorliegend kann der Aufnahmepunkt 18 sowohl zwischen dem Lichtmodul 12 und der Aufnahmeeinheit 13 (13',13") als auch zwischen der Aufnahmeeinheit 13 (13',13") und der Rückwand des Gehäuses 10 verstanden werden. Durch das Ausgleichselement 14 wird wiederum ein Verkippen des Lichtmoduls 12 und damit der Hell-Dunkel-Grenze 24 vermieden, da sich ein Verstellweg 23 ausbildet, der die größere Länge der unteren Aufnahmeeinheit 13" mit hohem Wärmedehnungskoeffizienten ausgleicht. Gemäß der Darstellung ist lediglich ein Ausgleichselement 14 zwischen dem Lichtmodul 12 und dem Gehäuse 10 vorgesehen, wobei ein weiteres Ausgleichselement 14 zwischen der Aufnahmeeinheit 13' vorzugsweise auf deren Unterseite und dem Lichtmodul 12 vorgesehen sein kann, so dass sich die Verstellwege 23 der Ausgleichselemente 14 addieren können.

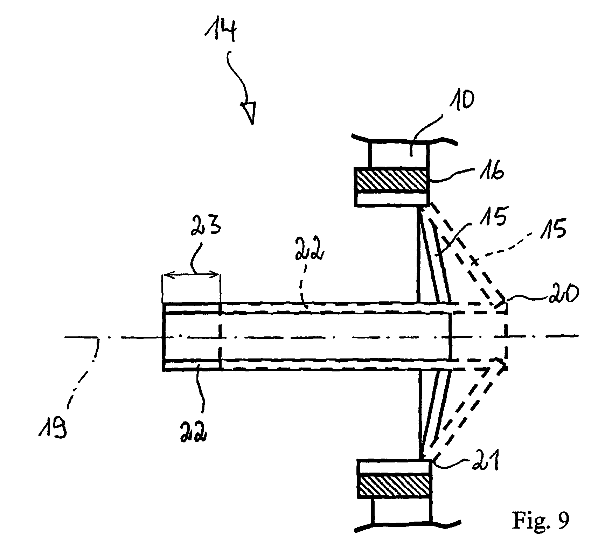

Figur 9 zeigt eine detaillierte Ansicht des Ausgleichselementes 14 in einer im Gehäuse 10 aufgenommenen Situation. Das Ausgleichselement 14 ist aus einer Membran 15 gebildet, die eine Kegelform besitzt und rotationssymmetrisch um die Achse 19 ausgebildet ist. Die Kegelform kann einen Öffnungswinkel von Beispielsweise 120° bis 140° besitzen, wobei sich der Kegelöffnungswinkel der Membran 15 in Abhängigkeit von der Temperatur ändern kann. Die gestrichelte Darstellung der Membran 15 und des Anschlussstückes 22 zeigt das Ausgleichselement 14 bei einer erhöhten Temperatur, wobei die durchgezogenen Körperkanten das Ausgleichselement 14 bei einer niedrigeren Temperatur darstellen. Ändert sich die Temperatur in einem Bereich, wie dieser zwischen einem Betrieb und einem Ruhezustand eines Scheinwerfers bzw. eines Kraftfahrzeuges auftreten kann, so ändert sich der Öffnungswinkel der Membran beispielsweise von 140° auf 120°. Der sich daraus ergebene Verstellweg 23 kann einen Faktor 10 der Änderung der radialen Länge der Membran 15 aufweisen, so dass ein thermomechanischer Verstärker gebildet ist.

Die Membran 15 weist eine achsnahe Innenseite 20 und eine achsfeme Außenseite 21 auf, wobei die Membran 15 durch einen Ringkörper 16 über die Außenseite 21 umschlossen ist. Der Ringkörper 16 besitzt einen Wärmedehnungskoeffizienten, der kleiner ist als der Wärmedehnungskoeffizient der Membran 15. Um zu verhindern, dass sich die Membran 15 bei Erwärmung radial ausdehnt und bei Abkühlung in Richtung zur achsnahen Innenseite 20 wieder zusammenzieht, wirkt der Ringkörper 16 als Kompensationskörper 16, um den Außendurchmesser der Membran 15 konstant zu halten. Im Ergebnis wird der Verstellweg 23 erzeugt, der endseitig am Anschlussstück 22 angezeichnet ist.

### Bezugszeichenliste

- 10: Gehäuse
- 11: Rahmenelement
- 12: Lichtmodul
- 13: Aufnahmeeinheit
- 13': Aufnahmeeinheit, Werkstoff mit niedrigem Wärmedehnungskoeffizienten
- 13": Aufnahmeeinheit, Werkstoff mit hohem Wärmedehnungskoeffizienten
- 14: Ausgleichselement
- 15: Membran
- 16: Kompensationskörper
- 17: Verbindungspunkt
- 18: Aufnahmepunkt
- 19: Achse
- 20: achsnahe Innenseite
- 21: achsfeme Außenseite
- 22: Anschlussstück
- 23: Verstellweg
- 24: Hell-Dunkel-Grenze

## Patentansprüche

1. Optisches System als Scheinwerfer, Sensoreinrichtung oder Kamerasystem für ein Kraftfahrzeug ausgebildet, mit einem Gehäuse (10), das durch ein Aufnahmeelement (11) aufgenommen ist, wobei im Gehäuse (10) wenigstens ein optisches Mittel (12) aufgenommen ist und wobei in der Verbindungskette zwischen dem Aufnahmeelement (11) und dem optischen Mittel (12) wenigstens ein Ausgleichselement (14) angeordnet ist,
**dadurch gekennzeichnet, dass**
das Ausgleichselement (14) eine sich um eine Achse (19) herum erstreckende trichterförmige bzw. kegelförmige Membran (15) mit einer achsnahen Innenseite (20) und einer achsfernen Außenseite (21) aufweist, wobei die trichterförmige Membran (15) einen Hohlkegel mit einem durch Wärmedehnung des Werkstoffs der Membran (15) veränderbaren Kegelwinkel bildet, und dass
das Ausgleichselement (14) einen Kompensationskörper (16) aufweist, der einen Ringkörper (16) bildet, welcher die Membran (15) an der Außenseite (21) umschließt,
und wobei der Ringkörper (16), dessen Wörmedehnungskoeffizient kleiner als der der Membran (15) ist, derart mit der Membran (15) zusammenwirkt, dass in der Membran (15) ein thermisch bedingter Verstellweg erzeugbar ist, über den eine thermisch bedingte Änderung der Lage des optischen Mittels (12) relativ zum Aufnahmeelement (11) ausgleichbar ist, indem der Ringkörper (16) den Durchmesser der Membran (15) an der Außenseite (21) konstant hält.

2. Optisches System nach Anspruch 1, **dadurch gekennzeichnet, dass** das optische System als Scheinwerfer mit einem Gehäuse (10) für ein Kraftfahrzeug ausgebildet ist, wobei das Aufnahmeelement (11) durch ein Rahmenelement (11) des Kraftfahrzeugs und das optische Mittel (12) durch ein im Scheinwerfer aufgenommenes Lichtmodul (12) gebildet ist.

3. Optisches System nach Anspruch 1 oder 2, **dadurch gekennzeichnet, dass** das Gehäuse (10) über wenigstens einen Verbindungspunkt (17) mit dem Aufnahmeelement (11) verbunden ist, wobei wenigstens ein Ausgleichselement (14) im Verbindungspunkt (17) angeordnet ist.

4. Optisches System nach Anspruch 1 bis 3, **dadurch gekennzeichnet, dass** das optische Mittel (12) durch eine Aufnahmeeinheit (13) über wenigstens einen Aufnahmepunkt (18) aufgehängt ist, wobei wenigstens ein Ausgleichselement (14) im Aufnahmepunkt (18) angeordnet ist.

5. Optisches System nach einem der vorgenannten Ansprüche, **dadurch gekennzeichnet, dass** das Ausgleichselement (14) ein Anschlussstück (22) aufweist, das über die Innenseite (20) der Membran (15) mit dieser verbunden ist.

6. Optisches System nach einem der vorgenannten Ansprüche, **dadurch gekennzeichnet, dass** der Ringkörper (16) über die Außenseite (21) der Membran (15) aufgeschraubt, aufgeschrumpft, aufgepresst oder mit dem Werkstoff der Membran (15) umspritzt ist.

7. Optisches System nach einem der vorgenannten Ansprüche, **dadurch gekennzeichnet, dass** das Ausgleichselement (14) derart angeordnet ist, dass wenigstens auf einer Seite der trichterförmigen Membran (15) eine Konvektion zwischen der Membran (15) und der Umgebungsluft des optischen Systems ermöglicht ist.

8. Optisches System nach einem der vorgenannten Ansprüche, **dadurch gekennzeichnet, dass** das Ausgleichselement (14) derart angeordnet ist, dass die Membran (15) einen Teil des Gehäuses (10) bildet oder dass der Ringkörper (16) durch einen Teil des optischen Mittels (12) gebildet ist.

9. Optisches System nach einem der Ansprüche 2 bis 8, **dadurch gekennzeichnet, dass** das Lichtmodul (12) Licht mit einer Hell-Dunkel-Grenze (24) aussendet, wobei das Ausgleichselement (14) im Verbindungspunkt (17) und/oder im Aufnahmepunkt (18) derart angeordnet ist, dass eine thermisch bedingte Änderung der Hell-Dunkel-Grenze (24) ausgleichbar ist.

10. Optisches System nach Anspruch 1 und 3 bis 8, **dadurch gekennzeichnet, dass** das optische System als Sensoreinrichtung mit einem Gehäuse (10) ausgebildet ist, wobei das optische Mittel (12) durch ein im Gehäuse (10) aufgenommenes Sensorelement (12) gebildet ist.

11. Optisches System nach Anspruch 10, **dadurch gekennzeichnet, dass** die Sensoreinrichtung als Kamerasystem ausgeführt und vorzugsweise als Frontkamera für ein Kraftfahrzeug einsetzbar ist, wobei das Sensorelement (12) durch eine Bilderfassungseinheit (12) gebildet ist.

## Claims

1. Optical system, such as a headlamp, a sensor device or a camera system designed for a motor vehicle, with a housing (10), which is received by a reception element (11), wherein at least one optical means (12) is received in a housing (10) and wherein at least one compensating element (14) is arranged in the connection system between the reception element (11) and the optical means (12),
**characterized in that**
the compensating element (14) has a funnel-shaped or a cone-shaped membrane (15) extending around an axis (19) and having an adaxial inside (20) and an abaxial outside (21), wherein the funnel-shaped membrane (15) forms a hollow cone with a cone angle changeable by thermal expansion of the material of the membrane (15), and the compensating element (14) has a compensating body (16) forming a ring body (16) enclosing the membrane (15) on the outside (21),
and wherein the ring body (16), whose thermal expansion coefficient is smaller than that of the membrane (15), interacts with the membrane (15) in such a manner, that a thermally caused adjustment path can be generated in the membrane (15), by means of which a thermally caused modification of the position of the optical means (12) relative to the reception element (11) can be compensated as the ring body (16) keeps the diameter of the membrane (15) constant on the outside (21).

2. Optical system following claim 1, **characterized in that** the optical system is shaped as a headlamp in a housing (19) for a motor vehicle, wherein the reception element (11) is formed by a frame element (11) of the motor vehicle and the optical means (12) is formed by a light module (12) received by the headlamp.

3. Optical system following claim 1 or 2, **characterized in that** the housing (10) is connected to the reception element (11) by means of at least one connecting point (17), and wherein at least one compensating element (14) is arranged in the connecting point (17).

4. Optical system following claim 1 to 3, **characterized in that** the optical means (12) is suspended by way of at least one reception point (18) by means of a reception unit (13), and wherein at least one compensating element (14) is arranged in the reception point (18).

5. Optical system following one of the previous claims, **characterized in that** the compensating element (14) has a connection piece (22) which is connected with the membrane (15) by means of the inside (20) of the membrane (15).

6. Optical system following one of the previous claims, **characterized in that** the ring body (16) is screwed on, shrunk on, pressed on over the outside (21) of the membrane (15) or overmolded with the material of the membrane (15).

7. Optical system following one of the previous claims, **characterized in that** the compensating element (14) is arranged so that convection between the membrane (15) and the ambient air of the optical system is possible at least on one side of the funnel-shaped membrane (15).

8. Optical system following one of the previous claims, **characterized in that** the compensating element (14) is arranged so that the membrane (15) forms part of the housing (10) or that the ring body (16) is formed by part of the optical means (12).

9. Optical system following one of the claims 2 to 8, **characterized in that** the light module (12) emits light with a cut-off line (24), and wherein the compensating element (14) is arranged in the connecting point (17) and / or in the reception point (18) so that the thermally caused change of the cut-off line (24) can be compensated for.

10. Optical system following claim 1 and 3 to 8 , **characterized in that** the optical system is formed as a sensor device with a housing (10), the optical means (12) being formed by a sensor element (12) received in the housing (10).

11. Optical system following claim 10, **characterized in that** the sensor device is executed as a camera system and, in a preferred embodiment, is applicable as a front camera for a motor vehicle, the sensor element (12) being formed by an image recording unit (12).

## Revendications

1. Système optique pour un véhicule automobile réalisé en tant que projecteur, dispositif à capteur ou système à caméra avec un boîtier (10) qui est supporté par un élément de logement (11), au moins un moyen optique (12) étant reçu dans le boîtier (10) et au moins un élément de compensation (14) étant disposé dans la chaîne de liaison entre l'élément de logement (11) et le moyen optique (12),
**caractérisé en ce que**
l'élément de compensation (14) présente une membrane (15) en forme d'entonnoir ou bien conique qui s'étend autour d'un axe (19) avec un côté intérieur (20) proche à l'axe et un côté extérieur (21) distant de l'axe, la membrane (15) en forme d'entonnoir formant un cône creux avec un angle de cône variable par dilatation thermique de la matière de la membrane (15) et que
l'élément de compensation (14) présente un corps de compensation (16) qui forme un corps circulaire (16) qui encercle la membrane (15) sur le côté extérieur (21),
et le corps circulaire (16) dont le coefficient de dilatation thermique est inférieur à celui de la membrane (15) étant en interaction avec la membrane (15) de telle manière qu'une course de réglage due à la thermique puisse être produite dans la membrane (15) par laquelle une modification due à la thermique de la position du moyen optique (12) par rapport à l'élément de logement (11) puisse être compensée par le corps circulaire (16) tenant le diamètre de la membrane (15) constant sur le côté extérieur (21).

2. Système optique selon la revendication 1, **caractérisé en ce que** le système optique est un projecteur avec un boîtier (10) pour un véhicule automobile, l'élément de logement (11) étant formé par un élément de cadre (11) du véhicule automobile et le moyen optique (12) étant réalisé par un module d'éclairage (12) introduit dans le projecteur.

3. Système optique selon l'une des revendications 1 ou 2, **caractérisé en ce que** le boîtier (10) est relié par au mois un point de liaison (17) avec l'élément de logement (11), au moins un élément de compensation (14) étant disposé au point de liaison (17).

4. Système optique selon l'une des revendications 1 à 3, **caractérisé en ce que** le moyen optique (12) est suspendu sur au moins un point de logement (18) par une unité de logement (13), au moins un élément de compensation (14) étant disposé au point de logement (18).

5. Système optique selon l'une des revendications mentionnées ci-dessus, **caractérisé en ce que** l'élément de compensation (14) présente un raccord (22) qui est relié avec la membrane (15) par le côté intérieur (20) de celle-ci.

6. Système optique selon l'une des revendications mentionnées ci-dessus, **caractérisé en ce que** le corps circulaire (16) est vissé, fretté, pressé ou enrobé avec la matière de la membrane (15) sur le côté extérieur (21) de la membrane (15).

7. Système optique selon l'une des revendications mentionnées ci-dessus, **caractérisé en ce que** l'élément de compensation (14) est disposé de telle manière qu'au moins sur un côté de la membrane en forme d'entonnoir (15) une convection entre la membrane (15) et l'air de l'environnement du système optique soit possible.

8. Système optique selon l'une des revendications mentionnées ci-dessus, **caractérisé en ce que** l'élément de compensation (14) est disposé de telle manière que la membrane (15) forme une partie du boîtier (10) ou que le corps circulaire (16) soit réalisé par une partie du moyen optique (12).

9. Système optique selon l'une des revendications 2 à 8, **caractérisé en ce que** le module d'éclairage (12) émet de la lumière avec une coupure clair-obscur (24), l'élément de compensation (14) au point de liaison (17) et/ou au point de logement (18) étant disposé de telle manière qu'une modification de la coupure clair-obscur (24) due à la thermique puisse être compensée.

10. Système optique selon les revendications 1 et 3 à 8, **caractérisé en ce que** le système optique est réalisé sous forme de dispositif à capteur avec un boîtier (10), le moyen optique (12) étant réalisé par un élément capteur (12) introduit au boîtier (10).

11. Système optique selon la revendication 10, **caractérisé en ce que** le dispositif à capteur est réalisé sous forme de système à caméra et est utilisable de préférence en tant que caméra avant pour un véhicule automobile, l'élément capteur (12) étant réalisé par une unité d'enregistrement de l'image (12).
